Europäisches Patentamt

European Patent Office

Office européen des brevets

(11) Veröffentlichungsnummer: **0 457 947 A1**

# (12) EUROPÄISCHE PATENTANMELDUNG

(21) Anmeldenummer: 90109826.9

(22) Anmeldetag: 23.05.90

(51) Int. Cl.5: **F16L 47/00, F16L 33/22, B29C 45/16**

(43) Veröffentlichungstag der Anmeldung:
27.11.91 Patentblatt 91/48

(84) Benannte Vertragsstaaten:
AT BE CH DE DK ES FR GB GR IT LI NL SE

(71) Anmelder: KARL RAFELD KG
SPRITZGUSSWERK, ELEKTRONIK UND
FORMENBAU
Kirnachstrasse 15-19
W-8954 Biessenhofen-Ebenhofen(DE)

(72) Erfinder: Rafeld, Karl
Kirnachstrasse 15
W-8954 Biessenhofen-Ebenhofen(DE)

(74) Vertreter: Kern, Wolfgang, Dipl.-Ing. et al
Patentanwälte Kern, Brehm und Partner
Albert-Rosshaupter-Strasse 73
W-8000 München 70(DE)

(54) Verfahren zur Herstellung von kunststoffummantelten Rohrverbindungsstücken durch Spritzgiessen.

(57) Verfahren zur Herstellung von kunststoffummantelten Rohrverbindungsstücken durch Spritzgießen, bei dem ein innerer, mit einem Gewinde zum Einschrauben einer Armatur versehener Muffenkörper mit einem äußeren Kunststoffmuffenkörper in einem Spitzgußwerkzeug drehfest verbunden wird.

Das Verfahren soll so weitergebildet werden, daß mit vergleichsweise geringem Aufwand eine dauerhafte Verbindung zwischen dem mit einem Gewinde zum Einschrauben einer Armatur versehenen inneren Muffenkörper und dem äußeren Kunststoffmuffenkörper erreicht wird, die auch unter extremen mechanischen und Wärmebelastungen vollständig dicht bleibt.

Dies wird dadurch erreicht, daß der äußere Kunststoffmuffenkörper aus einem niedrigschmelzenden Olefin-Material spritzgegossen wird, woraufhin in die Muffenbohrung ein Kernkörper eingesetzt wird, dessen äußere Oberfläche der inneren Oberfläche des herzustellenden Rohrverbindungsstücks entspricht, und danach zwischen den Kernkörper und die innere Oberfläche des Kunststoffmuffenkörpers zur Herstellung des inneren Muffenkörpers ein höherschmelzendes Olefin-Material eingespritzt wird, das die Oberfläche des äußeren Kunststoffmuffenkörpers aufschmilzt und mit ihr verschmilzt.

Die Erfindung betrifft ein Verfahren zur Herstellung von kunststoffummantelten Rohrverbindungsstücken durch Spritzgießen, bei dem ein innerer, mit einem Gewinde zum Einschrauben einer Armatur versehener Muffenkörper mit einem äußeren Kunststoffmuffenkörper in einem Spritzgußwerkzeug drehfest verbunden wird.

Mit einem bekannten Verfahren dieser Art werden Unterputzmuffen aus Kunststoff als Teil eines Übergangsstücks zur Verbindung von Kunststoffrohren für flüssige Medien mit Armaturen aus metallischen Werkstoffen, insbesondere für den Sanitär- und Heizungsbereich, hergestellt, wobei das eine Ende der Unterputzmuffe eine abgesetzte Bohrung zum Einschweißen eines Kunststoffrohres und das andere Muffenende eine eingespritzte metallene Anschlußhülse mit einem Gewinde zum Aufschrauben einer Armatur aufweist (DGM 8716394).

Um eine zug- und drehfeste Verbindung zwischen der metallenen Hülse und der aus Kunststoff bestehenden Unterputzmuffe zu schaffen, die durch Aufspritzen des Kunststoffmaterials auf die Hülse hergestellt wird, weist die Anschlußhülse an ihrem hinteren Ende eine radiale Hinterschneidung auf, die mit wenigstens einem sich in etwa axial und parallel zur Längsachse der Anschlußhülse erstreckenden Hinterstich versehen ist und in die das Kunststoffmaterial des Muffenkörpers eindringt, um dadurch eine Formschlüssigkeit zwischen Anschlußhülse und Muffenkörper herzustellen. Desweiteren ist die äußere Oberfläche der Anschlußhülse mit sich rund um ihren Umfang erstreckenden Nocken oder Stegen versehen, in die das Kunststoffmaterial der Unterputzmuffe beim Aufspritzen der Muffe eindringt. Trotz dieser mit erheblichem Fertigungsaufwand hergestellten Oberflächenschikanen der metallenen Anschlußhülse, die dazu dienen sollen, eine formschlüssige Verbindung zwischen Kunststoffkörper und Metallkörper herzustellen, ist jedoch nicht auszuschließen, daß sich aufgrund von Schrumpfungen Leckagewege zwischen den einander berührenden Oberflächen verschiedenen Materials öffnen, die die Unterputzmuffe als Verbindungselement zwischen den Kunststoffrohren und einer auf- bzw. einzuschraubenden Armatur unbrauchbar machen können.

Bei einem weiteren bekannten Übergangsstück der oben beschriebenen Art wird zur Herstellung einer formschlüssigen Verbindung zwischen der metallenen Anschlußhülse und dem auf sie aufgespritzten Muffenkörper aus Kunststoff die Anschlußhülse mit einer Verdrehsicherung in bezug auf den sie umgebenden Kunststoffkörper versehen, die aus in dem stirnseitigen inneren Ende der Anschlußhülse angebrachten Vertiefungen in Form von Schlitzen, Bohrungen u.dgl. und auf der äußeren Oberfläche der Anschlußhülse angeordneten Vertiefungen in Form von Schlitzen, Bohrungen u.dgl. bestehen, die mit den stirnseitigen Vertiefungen zumindest teilweise in Verbindung stehen und in die der aufgespritzte Kunststoff eindringen kann. (DGM 88 10 285). Auch hier wird also zu dem Zweck, zwischen Kunststoffkörper und Metallkörper eine mechanisch haltbare und darüberhinaus flüssigkeitsdichte Verbindung zu schaffen, ein erheblicher Fertigungsaufwand getrieben.

Schließlich ist auch bereits vorgeschlagen worden, ein Kupplungsstück für das Ende eines aus Kunststoffmaterial bestehenden Schlauchs mit dem Schlauch durch Angießen oder Anformen dadurch zu verbinden, daß das Ende des Schlauchs in eine Spritzgußform für den Körper des Kupplungsstücks eingelegt wird, wobei ein oberflächliches Verschmelzen des Schlauchmaterials und des Kupplungsstücks, wenn beide Teile aus demselben Kunststoffmaterial bestehen, beabsichtigt ist.

Diese Verfahrensweise ist jedoch zur Herstellung von kunststoffummantelten Rohrverbindungsstücken, insbesondere Übergangsstücken zum Verbinden von Kunststoffrohren mit Armaturen aus metallischen Werkstoffen, nicht geeignet, weil sie nicht zu einer mechanisch festen und flüssigkeitsdichten, dauerhaften Verbindung der genannten Teile führt. Dies ergibt sich bereits daraus, daß der zum Umgießen bestimmte Schlauch mindestens einen Bund aufweisen soll, der in der Nähe des Schlauchendes vor dem Aufbringen des Kupplungsstücks in denjenigen Teil des Schlauches geprägt wird, der von dem Körper aus Kunststoffmaterial umgeben sein soll. Mit dieser Maßnahme soll der Widerstand gegenüber am Kupplungsstück angreifenden Zugkräften erhöht werden (DE-US 2 307 467).

Die Aufgabe der Erfindung besteht deshalb darin, das Verfahren der eingangs genannten Art so weiterzubilden, daß mit vergleichsweise geringem Aufwand eine dauerhafte Verbindung zwischen dem mit einem Gewinde zum Einschrauben einer Armatur versehenen inneren Muffenkörper und dem äußeren Kunststoffmuffenkörper erreicht wird, die auch unter extremen mechanischen und Wärmebelastungen vollständig dicht bleibt.

Diese Aufgabe wird erfindungsgemäß dadurch gelöst, daß der äußere Kunststoffmuffenkörper aus einem niedrigschmelzenden Olefin-Material spritzgegossen wird, woraufhin in die Muffenbohrung ein Kernkörper eingesetzt wird, dessen äußere Oberfläche der inneren Oberfläche des herzustellenden Rohrverbindungsstücks entspricht, und danach zwischen den Kernkörper und die innere Oberfläche des Kunststoffmuffenkörpers zur Herstellung des inneren Muffenkörpers ein höherschmelzendes Olefin-Material eingespritzt wird, das die Oberfläche des äußeren Kunststoffmuffenkörpers aufschmilzt und mit ihr verschmilzt.

Der dieser Verfahrensweise zugrundeliegende wesentliche Gedanke besteht darin, für die beiden miteinander im Spritzgußverfahren zu verbindenden Muffenkörper verschiedene Kunststoffmaterialien zu verwenden, die sich zwar im Schmelzfluß miteinander verbinden, sich jedoch zumindest im Hinblick auf ihre Schmelztemperaturen in der Weise unterscheiden, daß der äußere Muffenkörper bei einer niedrigeren Temperatur schmilzt als der innere Muffenkörper. Dadurch wird sichergestellt, daß der zunächst im Spritzgußverfahren hergestellte äußere Muffenkörper durch das nachträglich in die Spritzgußform eingespritzte Material höherer Temperatur oberflächlich mit Hilfe des sich auf höherer Schmelztemperatur befindenden Spritzgußmaterials des inneren Muffenkörpers so weit aufgeschmolzen wird, daß die Verschmelzung zu einer dauerhaften Verbindung der beiden unterschiedlichen Materialien führt, welche auch größeren Wärmespannungen und mechanischen Beanspruchungen widersteht. Als Material für den äußeren Muffenkörper hat sich Polypropylen (PP) bewährt, das eine Schmelztemperatur von etwa 170°C hat, während für das Material des inneren Muffenkörpers zweckmäßigerweise ein Polyamid (PA) mit einer Schmelztemperatur von etwa 300°C Verwendung findet. Das letztgenannte Material läßt sich zudem mit Kohlenstoffasern oder Glasfasern mischen, um dadurch seine Zugfestigkeit und Scherfestigkeit in etwa denjenigen von Messing anzupassen.

Besonders vorteilhaft, weil kostengünstig, hat sich diejenige Ausführungsform des erfindungsgemäßen Verfahrens erwiesen, bei der auf Schikanen in Form von Rippen, Nuten, Rillen, Vertiefungen, Hinterschneidungen u.dgl. auf der inneren Oberfläche des äußeren Muffenkörpers verzichtet wird, da die Schmelzverbindung zwischen den beiden Hülsen ausreichend drehfest ist und eine Schwindung des Spritzgießmaterials beim Erkalten nicht zu befürchten ist, da beide verwendeten Materialien Olefine sind.

Die zur Durchführung des erfindungsgemäßen Verfahrens verwendeten Schritte sehen vor, daß zunächst der äußere Muffenkörper in einem geeigneten Spritzgußwerkzeug aus Polypropylen gespritzt wird, woraufhin nach seinem Erkalten und dem Entfernen des den Hohlraum des Muffenkörpers ausfüllenden Kerns, der eine glatte äußere Oberfläche aufweist, ein zweiter Kern kleineren Durchmessers eingelegt wird, dessen äußere Oberfläche der negativen Form der inneren Oberfläche des herzustellenden Rohrverbindungs- bzw. Übergangsstücks entspricht, also üblicherweise ein Gewinde aufweist, in das später eine metallene Anschlußarmatur eingeschraubt wird.

Nach dem Einlegen des zweiten Kerns wird der Hohlraum zwischen dem äußeren Muffenkörper und der Kernoberfläche mit Ultramid T, also einem Polyamid, ausgespritzt, dessen Schmelzpunkt bei etwa 300°C liegt und das sich durch Aufschmelzen der Oberfläche des äußeren Muffenkörpers mit letzterem innig verbindet.

Nach dem Erkalten des inneren Muffenkörpers wird der Kern entfernt und das Rohrverbindungsstück in seiner Gesamtheit der Spritzgußform entnommen. Es kann dann sofort zweckentsprechend Verwendung finden, da eine Nachbearbeitung nicht erforderlich ist.

## Patentansprüche

1. Verfahren zur Herstellung von kunststoffummantelten Rohrverbindungsstücken durch Spritzgießen, bei dem ein innerer, mit einem Gewinde zum Einschrauben einer Armatur versehener Muffenkörper mit einem äußeren Kunststoffmuffenkörper in einem Spritzgußwerkzeug drehfest verbunden wird,
   **dadurch gekennzeichnet,** daß der äußere Kunststoffmuffenkörper aus einem niedrigschmelzenden Olefin-Material spritzgegossen wird, woraufhin in die Muffenbohrung ein Kernkörper eingesetzt wird, dessen äußere Oberfläche der inneren Oberfläche des herzustellenden Rohrverbindungsstücks entspricht, und danach zwischen den Kernkörper und die innere Oberfläche des Kunststoffmuffenkörpers zur Herstellung des inneren Muffenkörpers ein höherschmelzendes Olefin-Material eingespritzt wird, das die Oberfläche des äußeren Kunststoffmuffenkörpers aufschmilzt und mit ihr verschmilzt.

2. Verfahren nach Anspruch 1, **dadurch gekennzeichnet,** daß als niedrigschmelzendes Olefin-Material Polypropylen und als hochschmelzendes Olefin-Material Polyamid verwendet wird.

3. Verfahren nach Anspruch 2, **dadurch gekennzeichnet,** daß dem Polyamid Kohlefasern in einem Anteil zugesetzt sind, der die Zugfestigkeit und Scherfestigkeit des Werkstoffs etwa auf die entsprechenden Werte von Messing erhöht.

4. Verfahren nach einem der Ansprüche 1 - 3, **dadurch gekennzeichnet,** daß der äußere Kunststoffmuffenkörper und der innere Muffenkörper in ein und demselben Spritzgußwerkzeug unter Verwendung zweier verschiedener Kernkörper hergestellt werden.

5. Verfahren nach einem der Ansprüche 1 - 4, **dadurch gekennzeichnet,** daß zumindest die innere radiale Oberfläche des äußeren Kunststoffmuffenkörpers, die mit der äußeren Oberfläche des inneren Muffenkörpers verschmilzt, als glatte Oberfläche, frei von Nuten, Rillen, Vertiefungen und Hinterschneidungen u.dgl. hergestellt wird.

| | | Europäisches Patentamt | EUROPÄISCHER RECHERCHENBERICHT | Nummer der Anmeldung EP 90 10 9826 |

# EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-U-8 716 394 (RAFELD) <br> — — — | 1-5 | F 16 L 47/00 <br> F 16 L 33/22 <br> B 29 C 45/16 |
| Y | EP-A-0 313 543 (EGGER) <br> * Zusammenfassung * <br> — — — | 1-5 | |
| D,A | DE-U-8 810 285 (RAFELD) <br> — — — | 1-5 | |
| D,A | DE-A-2 307 467 (AQUITANE TOTAL ORGANICO) <br> — — — | 1-5 | |
| A | DE-A-2 240 548 (RÜHLE) <br> — — — | | |
| A | FR-A-2 299 143 (HEPWORTH IRON CO.) <br> — — — | | |
| A | DE-A-3 039 796 (BATTENFELD MASCHINENFABRIEK) <br> — — — | | |
| A | DE-A-3 323 380 (JESCHKLE) <br> — — — | | |
| A | AT-B-1 985 77 (EPPLER) <br> — — — — — | | |

## RECHERCHIERTE SACHGEBIETE (Int. Cl.5)

F 16 L
B 29 C

Der vorliegende Recherchenbericht wurde für alle Patentansprüche erstellt

| Recherchenort | Abschlußdatum der Recherche | Prüfer |
|---|---|---|
| Den Haag | 25 Januar 91 | ROBERTS P.J. |